# EUROPÄISCHE PATENTANMELDUNG

(11) **EP 4 040 650 A1**
(43) Veröffentlichungstag der Anmeldung: **10.08.2022**
(21) Anmeldenummer: 21155378.9
(22) Anmeldetag: 05.02.2021
(51) Int. Cl.: H02K 5/24, H02K 1/18, H02K 7/18

(54) **GEHÄUSE EINER ROTATORISCHEN DYNAMOELEKTRISCHEN MASCHINE MIT SCHALLDÄMMELEMENTEN**

(71) Anmelder: Flender GmbH, 46395 Bocholt (DE)
(72) Erfinder: Friedl, Daniel, 94081 Fürstenzell (DE); Gruber, Robert, 94099 Ruhstorf (DE); Keceli Mesaros, Akos, 24400 Senta (RS); Memminger, Oliver, 94127 Neuburg a. Inn (DE); Schifferer, Klaus, 94152 Neuhaus am Inn (DE); Sperl, Tobias, 94542 Haarbach (DE); Vogel, Anatoli, 94032 Passau (DE)
(74) Vertreter: Michalski Hüttermann & Partner Patentanwälte mbB

(57) **Zusammenfassung**

Die Erfindung betrifft ein Gehäuse (24) einer rotatorischen dynamoelektrischen Maschine (1),
das eine im wesentlichen quaderförmigen Rahmenstruktur (2) aufweist, mit axial verlaufenden, insbesondere außen liegenden Längsstreben (3),
wobei senkrecht zu den Längsstreben (3) Aufnahmeelemente (8, 17) vorgesehen sind, die mit den Längsstreben (3) verbunden sind,
wobei die Aufnahmeelemente (8,17) axial hintereinander koaxial angeordnet sind, derart, dass sich eine zylindrische Ausnehmung in der Längsachse (15) ergibt, in die ein magnetisch leitfähiger Körper, insbesondere ein Blechpaket (10) eines hohlzylindrischen Stators (9) der rotatorischen dynamoelektrischen Maschine (1) axial einsetzbar ist,
wobei die Bereiche zwischen den Längsstreben (3) am Außenumfang überwiegend von Schalldämmelementen (16) eingenommen sind,
wobei die Aufnahmeelemente (8,17) zumindest als Aufnahmeelemente (8) des magnetisch leitfähigen Körpers des Stators (9) und als Aufnahmeelemente (17) eines Lagerschildes (6) und/oder Lagers (7) ausgeführt sind.

## Beschreibung

Die Erfindung betrifft ein Gehäuse einer rotatorischen dynamoelektrischen Maschine, eine rotatorische dynamoelektrische Maschine, insbesondere einen Generator einer Windkraftanlage mit einem derartigen Gehäuse, als auch eine Windkraftanlage mit einer derartigen rotatorischen dynamoelektrischen Maschine.

Eine derartige elektrische Maschine bzw. ein Generator einer derartige Windkraftanlage kommen beispielsweise bei der Wandlung der Energie des Windes in elektrische Energie zum Einsatz, um diese Energie dann in ein Stromnetz einzuspeisen. Solche elektrischen Maschinen weisen dabei einen im Stator drehbar gelagerten Rotor auf.

Durch Kosten- und Bauraumoptimierung und steigenden Leistungsanforderungen der Windkraftanlagen werden Generatoren und ihre Komponenten immer kompakter.

Dies führt dazu, dass bei gleichbleibender Baugröße und höherer Leistungssteigerung Statorgehäuse ein geringeres Gewicht haben und höheren Betriebslasten ausgesetzt sind.

Dabei wird das Geräuschverhalten des Gehäuses durch angeregte Schwingungen, Luftströme im Gehäuseinneren und Einzeltöne ins Gehäuse eingeleitet. Dadurch verstärkt sich wiederum das Schwingungsverhalten, so dass die Betriebsgeräusche der Generatoren zunehmen und die maximal zulässigen Werte der Kundenanforderungen übersteigen.

Dadurch, dass sich innerhalb eines Maschinengehäuses breiten die Schallwellen und Schwingungen auf den großflächigen Blechen, wie z.B. den Mantelblechen des Gehäuses ausbreiten, werden erzeugen Geräusche und Einzeltöne an die Umgebung übertragen.

Maschinengehäuse, insbesondere Statorgehäuse werden grundsätzlich aus Stahlblechen konstruiert, die die innenliegenden Bauteile umschließen. Bei dieser Konstruktionsweise werden mechanische Schwingungen, Luftströme im Gehäuseinneren und Schallwellen an die Gehäuseaußenwände abgestrahlt, die die Schwingungen nach außen weitergeben.

Bisher wurden Statorgehäuse mit größeren Blechdicken der mantelbleche konstruiert und mit teils aufwendigen Rippen versteift, um diese Schwingungen zu unterbinden, was hohe Materialkosten und einen erhöhten Schweißaufwand verursacht.

Falls die Geräuschwerte zu hoch waren, wurden auch auf den Gehäusemantel stellenweise Schalldämmmatten montiert, wie dies beispielsweise der US 2010/0045124 A1 und der WO 2012/159661 A1 zu entnehmen ist.

Ausgehend davon liegt der Erfindung die Aufgabe zugrunde das Geräuschverhalten einer rotatorischen dynamoelektrischen Maschine, insbesondere eines Windkraftgenerators zu verbessern.

Die Lösung der gestellten Aufgabe gelingt durch ein Gehäuse einer rotatorischen dynamoelektrischen Maschine,
das eine im wesentlichen quaderförmigen Rahmenstruktur aufweist, mit axial verlaufenden, insbesondere außen liegenden Längsstreben,
wobei senkrecht zu den Längsstreben Aufnahmeelemente vorgesehen sind, die mit den Längsstreben verbunden sind,
wobei die Aufnahmeelemente axial hintereinander koaxial angeordnet sind, derart, dass sich eine zylindrische Ausnehmung in der Längsachse ergibt, in die ein magnetisch leitfähigen Körper, insbesondere ein Blechpaket eines hohlzylindrischen Stators der rotatorischen dynamoelektrischen Maschine axial einsetzbar ist,
wobei die Bereiche zwischen den Längsstreben am Außenumfangüberwiegend von Schalldämmelementen eingenommen sind,
wobei die Aufnahmeelemente zumindest als Aufnahmeelemente des magnetisch leitfähigen Körpers des Stators und als Aufnahmeelemente eines Lagerschildes und/oder Lagers ausgeführt sind.

Die Lösung der gestellten Aufgabe gelingt auch durch eine rotatorische dynamoelektrische Maschine, insbesondere Windkraftgenerator mit einem erfindungsgemäßen Gehäuse.

Die Lösung der gestellten Aufgabe gelingt auch durch eine Windkraftanlage mit einer rotatorische dynamoelektrische Maschine, insbesondere Windkraftgenerator mit einem erfindungsgemäßen Gehäuse.

Erfindungsgemäß weist nunmehr das Gehäuse, insbesondere ein quaderförmige Rahmenstruktur auf, die überwiegend durch Längsstreben zusammengehalten und versteift. Dabei weist nunmehr das Gehäuse eine offene Rahmen- oder Skelettkonstruktion auf, die durch Aufnahmeelemente gebildet wird, die mit Längsstreben gehalten und versteift werden. Die Öffnungen bzw. Bereiche zwischen den Längsstreben dieser offenen Rahmenkonstruktion werden anschließend durch Schalldämmelemente, insbesondere Schalldämmplatten verschlossen, insbesondere abgedeckt bzw. gefüllt. Somit haben die Schalldämmplatten direkten Kontakt zur inneren Umgebung und können den im Betreib der dynamoelektrischen Maschine erzeugten Schall effektiv absorbieren. Die Ausbreitung dieser Schallwellen wird mit den Schalldämmelementen verhindert.

Letztendlich können dabei u.a. bei einem Gehäuse für einen Stator einer dynamoelektrischen Maschine die schwingungsanfälligen Mantelbleche durch Schalldämmplatten ersetzt werden, was dem Geräuschpegel und dem Gewicht des Gehäuses und letztendlich der dynamoelektrischen Maschine zugutekommt.

Ein weiterer Vorteil ist, dass für die Rahmenstruktur des Gehäuses vergleichsweise wenig kostenintensives Material eingesetzt werden muss, da die Mantelbleche überwiegend entfallen. Dies führt somit zu einem geringeren Gewicht der Gesamtkonstruktion, als auch zu einem Kostenvorteil gegenüber bisherigen Konstruktionen.

In einer weiteren Ausführung sind die Schalldämmelemente überwiegend allein in den Bereichen zwischen den Längsstreben angeordnet und haben somit direkten Kontakt mit der innenliegenden Umgebung.

Auch wenn die Rahmenstruktur Anbaustrukturen aufweist, um Komponenten der rotatorischen dynamoelektrischen Maschine, wie einen Klemmenkästen oder einen Aufsatzkühler aufzunehmen, werden die verbleibenden Bereiche zwischen den Längsstreben und/oder Anbaustrukturen durch die Schalldämmelemente eingenommen.

Die Schalldämmelemente sind sowohl was das Material, die Dicke der Schalldämmelemente, als auch die Porengröße des Schalldämmmaterials betrifft, je nach der Schwingungsneigung und dem Aufstellungsbedingungen der dynamoelektrischen Maschine wählbar.

Durch die erfindungsgemäße Rahmenstruktur des Gehäuses ist die Rahmenstruktur selbsttragend ausgeführt. Damit lässt sich die Rahmenstruktur einfach transportieren und auch außer Haus fertigen. Des Weiteren sind keine zusätzlichen Stützelemente am Gehäuse vorzusehen, wenn Aufsatzkühler oder andere Anbauelemente an das Gehäuse angebracht werden.

Um im Betrieb einer dynamoelektrischen Maschine eine Führung eines Kühlmittelstromes zu erhalten, insbesondere im Bereich eines Wickelkopfes eines Wicklungssystems des Stators, sind innerhalb der axialen Reihung von Anbauelementen Schottelemente vorgesehen sind, die insbesondere axial zwischen dem Aufnahmeelemente des magnetisch leitfähigen Körpers des Stators und dem Aufnahmeelement eines Lagers angeordnet ist.

Die Längsstreben einer Rahmenstruktur sind aus Vollmaterial, Hohlmaterial, Halbprofile oder Mischungen davon. Ebenso können die Längsstreben und/oder Aufnahmeelemente aus unterschiedlichen Materialien sein. Vorzugsweise sind die Längsstreben und/oder Aufnahmeelemente jedoch aus Stahl.

Um die Schwingungsanfälligkeit des Gehäuses weiter zu reduzieren, ist die Rahmenstruktur asymmetrisch ausgeführt. Dabei sind die Längsstreben um die Achse asymmetrisch angeordnet und/oder weisen unterschiedliche Querschnittsformen auf.

Als einfache Maßnahme hat sich gezeigt, dass zumindest die Längsseiten der Rahmenstruktur, also die größeren Flächen wie die Wandungen mit Schalldämmplatten ausgeführt sind.

Durch die erfindungsgemäße Ausführung des Gehäuses einer rotatorischen dynamoelektrischen Maschine hat sich gezeigt, dass die Schallemissionen bei gleichzeitiger Einsparung an Gewicht stark reduziert werden können. Dies ist insbesondere bei Generatoren von Windkraftanlagen wichtig.

Auch wenn eine oder mehrere Anbauelemente am Gehäuse an den vorgesehenen Anbaustrukturen angebracht werden, wie Klemmenkästen oder Aufsatzkühler, sind aufgrund der selbstragenden Rahmenstruktur keine mechanischen oder schallemissionsmäßigen Beeinträchtigungen zu erwarten.

Vorzugsweise kann dabei der Aufsatzkühler als Luft-Luft oder Luft-Wasser Kühler ausgeführt sein.

Ebenso kann eine ein- oder beidseitige innere Belüftung der rotatorischen dynamoelektrischen Maschine umgesetzt werden.

Bei Einsatz eines derartigen Gehäuses eines Generators einer Windkraftanlage werden weniger Schallemissionen bei gleichzeitig reduziertem Gewicht erreicht.

Die Erfindung sowie weitere vorteilhafte Ausgestaltungen sind den beigefügten Ausführungsbeispielen zu entnehmen; darin zeigen:
- FIG 1: prinzipiellen Längsschnitt einer dynamoelektrischen Maschine,
- FIG 2: eine perspektivische Darstellung eines Gehäuses,
- FIG 3: eine perspektivische Darstellung eines Gehäuses mit Schalldämmelementen,
- FIG 4: einen Querschnitt eines Gehäuses mit Schalldämmelementen,
- FIG 5: prinzipielle Darstellung einer Windkraftanlage.

Soweit nachfolgend die Begriffe "axial", "radial" und "tangential" verwendet werden, sind sie stets auf die Achse bzw. Rotationsachse 15 bezogen. "Axial" ist eine Richtung parallel zur Rotationsachse 15. "Radial" ist eine Richtung orthogonal zur Rotationsachse 15 direkt auf die Rotationsachse 15 zu bzw. von ihr weg. "Tangential" ist eine Richtung, die sowohl orthogonal zur Axialrichtung als auch orthogonal zur Radialrichtung gerichtet ist. "Tangential" ist also eine Richtung, die bei einer konstanten Axialposition und in einem konstanten radialen Abstand kreisförmig um die Rotationsachse 15 herum gerichtet ist.

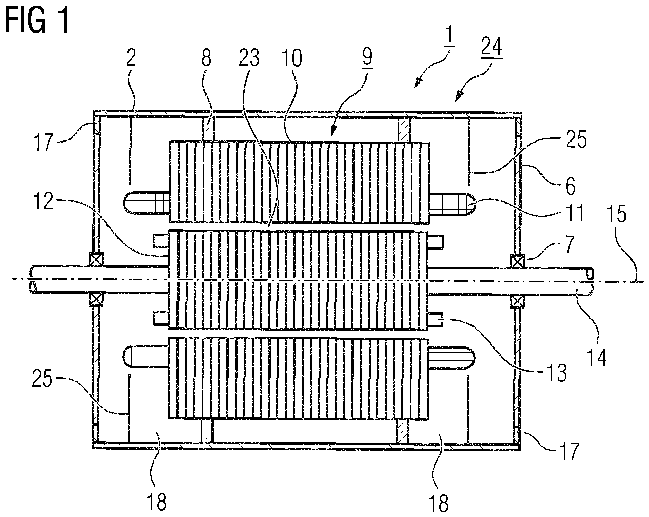

FIG 1 zeigt in einem prinzipiellen Längsschnitt einer dynamoelektrischen Maschine 1 einen Stator 9, der innerhalb einer Rahmenstruktur 2 eines Gehäuses 24 angeordnet ist. Der Stator 9 weist in nicht näher dargestellten Nuten ein Wicklungssystem auf, das an den Stirnseiten eines magnetisch leitfähigen Körpers, insbesondere eines Blechpakets 10 des Stators 9 Wickelköpfe 11 ausbildet. Das Blechpaket 10 ist in dieser Darstellung durch Aufnahmeelemente 8 in der Rahmenstruktur 2 gehalten, die später näher erläutert wird.

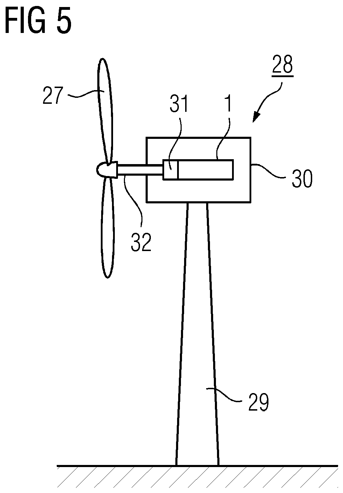

Von einem Luftspalt 23 beabstandet befindet sich ein Rotor 12, der mit einer Welle 14 drehfest verbunden ist und durch elektromagnetische Wechselwirkung mit dem bestromten Wicklungssystem des Stators 9 in Drehung um eine Achse 15 versetzt wird (Motorbetrieb). Im generatorischen Betrieb wird durch die Drehung des Rotors 12, der mit einer Windabtriebswelle 32 (z.B. gemäß FIG 5) gekoppelt ist, elektrische Energie erzeugt.

Der Rotor 12 ist in diesem Fall ein Rotor mit einem Kurzschlusskäfig. Die Rahmenstruktur 2 eignet sich genauso für Synchronmaschinen mit einem Rotor mit Wicklungssystem oder Permanentmagneten, als auch für doppelt gespeiste Asynchronmaschinen. Eine dafür erforderliche Erregereinrichtung, die das Wicklungssystem des Rotors 12 elektrisch kontaktiert ist nicht näher dargestellt.

Die Welle 14 wird durch Lager 7 in einem Lagerschild 6 gehalten, das in Aufnahmeelementen 17 der Rahmenstruktur 2 positioniert ist. Schottelemente 25, die eine Kühlluftstrom innerhalb des Gehäuses 24 leiten und führen sind nur prinzipiell dargestellt. Eine Ausführung der Schottelemente 25 gemäß FIG 1 würde ein axiales Einsetzen des Blechpakets 10 in das Gehäuse 24 erschweren.

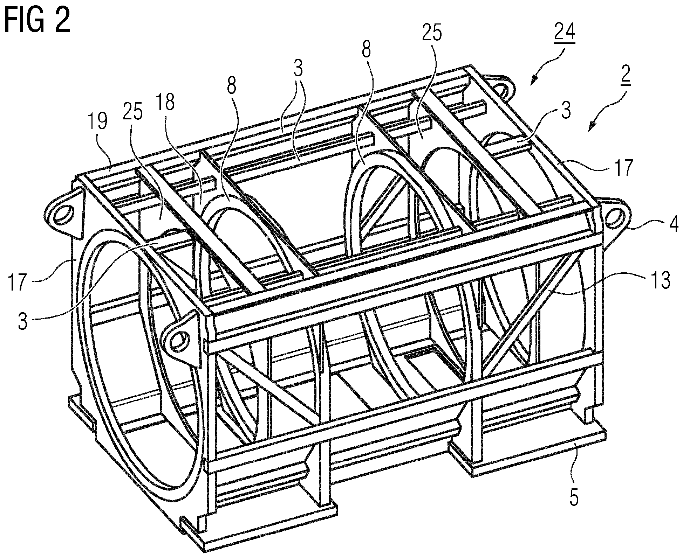

FIG 2 zeigt die Rahmenstruktur 2, die im Wesentlichen durch längs verlaufende Verstrebungen 3 bzw. Längsstreben und senkrecht dazu angeordneten Aufnahmeelementen 8, 17 für das Blechpaket 10 des Stators 9 und die Lagerschilde 6 gebildet ist. Die Rahmenstruktur 2 bildet somit insbesondere eine selbsttragende Rahmenstruktur 2 und ist somit auch als separates Zulieferteil herstellbar.

Die Aufnahmeelemente 8 sind für die Stützung und Halterung des Blechpakets 10 des Stators 9 vorgesehen. Dabei wird das Blechpaket 10 axial in die Rahmenstruktur 2 eingesetzt und insbesondere mit den Aufnahmeelementen 8 an den dafür vorgesehenen Anlagebereichen 20 verschweißt oder auf andere Art und Weise mit der Rahmenstruktur 2 drehfest verbunden. Über die Füße 5 ist ein Kontakt zu einem nicht näher dargestellten Fundament einer Anlage herstellbar.

Der Außenumfang des Blechpakets 10 bestimmt im Wesentlichen die innere Kontur des Aufnahmeelements 8. Die Rahmenstruktur 2 wirkt als Drehmomentenstütze im Betrieb der dynamoelektrischen rotatorischen Maschine 1.

Die Rahmenstruktur 2 ist ein quaderähnlich aufgebautes Gerippe oder Skelett, das längs der Achse 15 verlaufende Verstrebungen 3 aufweist, wobei die Aufnahmeelemente 8, 17 für Blechpaket 10 und Lagerschild 6 axial fluchtende Öffnungen aufweisen, um das Blechpaket 10 einsetzen zu können.

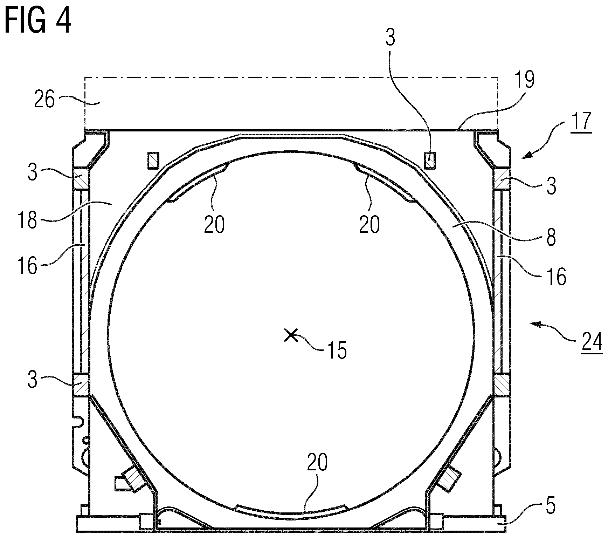

Die Verstrebungen 3 müssen dabei nicht zwangsläufig die gesamte axiale Länge der Rahmenstruktur 2 einnehmen. Sie können auch nur vorbestimmte axiale Abschnitte davon einnehmen. Ebenso sind die Verstrebungen 3 nicht zwangsläufig an der "Oberfläche" der Rahmenstruktur 2 vorgesehen - sie können sich auch radial weiter innen befinden (siehe FIG 4). Dabei wird insbesondere der Einbauraum des magnetisch leitfähigen Körpers ausgespart.

Am unteren Teil der Rahmenstruktur 2 sind Füße 5 vorgesehen, die einen Kontakt zu einem Fundament einer Anlage herstellen. Diese Füße 5 sind mit den dort verlaufenden Verstrebungen 3 und den dort befindlichen Aufnahmeelementen 8, 17 stoffschlüssig verbunden, insbesondere verschweißt.

Haken 4 an den Stirnseiten der Rahmenstruktur 2 erleichtern den Transport der Rahmenstruktur 2 und/oder der eingebauten Maschine.

Auf der Oberseite der Rahmenstruktur 2 bilden die Verstrebungen 3 eine Ebene 19, um einen Aufsatzkühler 26 auf der Rahmenstruktur 2 positionieren zu können, der insbesondere bündig mit der Rahmenstruktur 2 abschließt. Der Aufsatzkühler 26 kühlt dabei im Betrieb der dynamoelektrischen Maschine 1 die in der Maschine 1 vorhandenen Kühlluftströme zurück.

Um bei einer luftgekühlten Maschine 1 eine effiziente Kühlluftführung zu erhalten, können Schottelemente 25 in der Rahmenstruktur 2 vorgesehen werden, die ebenfalls axial fluchtend mit den Aufnahmeelementen 8, 17 angeordnet sind. Diese Schottelemente 25 umgeben insbesondere den Wickelkopf 11, um die Kühlluftströmung nicht nur um den Wickelkopf 11 zu führen, sondern auch ggf. eine Kühlluftströmung durch den Wickelkopf 11 zu erzwingen.

Im Bereich zwischen den Aufnahmeelementen 8 von Statorblechpaket und den Aufnahmeelemente 17 des Lagerschildes 6 bzw. Lagers 7 können zur Erhöhung der Stabilität Querstreben 13 vorgesehen werden, die nicht parallel zu den Verstrebungen 3 ausgerichtet sind.

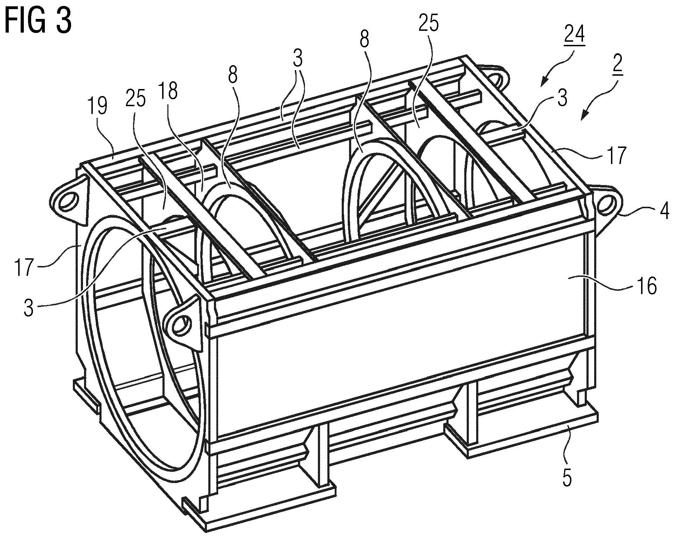

FIG 3 zeigt die Rahmenstruktur 2 aus FIG 2, wobei jedoch die zwischen den Verstrebungen 3 befindlichen Öffnungen beispielhaft durch Schalldämmelemente abgedeckt sind, beispielhaft als Schalldämmplatte 16 ausgeführt.

Der Vorteil einer derartigen Rahmenstruktur 2 ist nunmehr das vergleichsweise geringe Gewicht dieser Rahmenstruktur 2, da die Öffnungen nicht mehr durch Bleche abgedeckt sind, sondern lediglich durch leichte Schalldämmelemente. Diese sind wesentlich leichter als Metallbleche und reduzieren somit das Gewicht der Gesamtmaschine.

Des Weiteren werden vor allem die Geräuschemissionen reduziert. Dadurch, dass diese dynamoelektrische Maschine 1 vorzugsweise als Generator einer Windkraftanlage in einer Gondel 30 angeordnet ist, sind weiter Abdeckungen nicht notwendig, beispielweise hinsichtlich des Berührungsschutzes. In einer Gondel 30 ist, wenn überhaupt nur Fachpersonal zu Wartungszwecken vorgesehen.

FIG 4 zeigt in einem Querschnitt der Rahmenstruktur 2 die Verstrebungen 3, die Füße 5, als auch ein Aufnahmeelement 8 mit seinen Anlagebereichen 20 für das Blechpaket 10 des Stators 2. Des Weiteren sind die Öffnungen zu sehen, in die die Schalldämmelemente 16 angeordnet sind. Dies hat zur Folge, dass die Geräuschemissionen, die im Betrieb der dynamoelektrischen Maschine 1 aufgrund der Kühlung oder aus elektromagnetischen Gründen vom Stator 9 auf die Aufnahmeelemente 8 übertragen werden, sich wenig oder gar nicht nach außen bemerkbar machen.

FIG 5 zeigt eine Windkraftanlage 28 bei der in einer Gondel 30, die auf einem Turm 29 ist, eine derartige dynamoelektrische Maschine 1 als Generator angeordnet ist. Der Generator kann dabei über ein Getriebe 31 oder direkt von einer Windabtriebswelle 32 angetrieben werden. An einer Nabe der Windabtriebswelle 32 sind dabei Rotorblätter 27 angeordnet.

## Patentansprüche

1. Gehäuse (24) einer rotatorischen dynamoelektrischen Maschine (1),
das eine im wesentlichen quaderförmigen Rahmenstruktur (2) aufweist, mit axial verlaufenden, insbesondere außen liegenden Längsstreben (3),
wobei senkrecht zu den Längsstreben (3) Aufnahmeelemente (8, 17) vorgesehen sind, die mit den Längsstreben (3) verbunden sind,
wobei die Aufnahmeelemente (8,17) axial hintereinander koaxial angeordnet sind, derart, dass sich eine zylindrische Ausnehmung in der Längsachse (15) ergibt, in die ein magnetisch leitfähiger Körper, insbesondere ein Blechpaket (10) eines hohlzylindrischen Stators (9) der rotatorischen dynamoelektrischen Maschine (1) axial einsetzbar ist,
wobei die Bereiche zwischen den Längsstreben (3) am Außenumfang überwiegend von Schalldämmelementen (16) eingenommen sind,
wobei die Aufnahmeelemente (8,17) zumindest als Aufnahmeelemente (8) des magnetisch leitfähigen Körpers des Stators (9) und als Aufnahmeelemente (17) eines Lagerschildes (6) und/oder Lagers (7) ausgeführt sind.

2. Gehäuse (24) einer rotatorischen dynamoelektrischen Maschine (1) nach Anspruch 1, **dadurch gekennzeichnet, dass** die Rahmenstruktur (2) Anbaustrukturen aufweist, um Komponenten der rotatorischen dynamoelektrischen Maschine (1), wie einen Klemmenkasten oder einen Aufsatzkühler (23) aufzunehmen.

3. Gehäuse (24) einer rotatorischen dynamoelektrischen Maschine (1), nach Anspruch 1 oder 2, **dadurch gekennzeichnet, dass** die Bereiche zwischen den Längsstreben (3) und Anbaustrukturen überwiegend von Schalldämmelementen (16) eingenommen sind.

4. Gehäuse (24) einer rotatorischen dynamoelektrischen Maschine (1) nach einem der vorhergehenden Ansprüche, **dadurch gekennzeichnet, dass** die Bereiche zwischen den Längsstreben (3) und/oder Anbaustrukturen überwiegend von Schalldämmelementen (16) abgedeckt bzw. gefüllt sind.

5. Gehäuse (24) einer rotatorischen dynamoelektrischen Maschine (1) nach einem der vorhergehenden Ansprüche, **dadurch gekennzeichnet, dass** die Rahmenstruktur (2) selbsttragend ausgeführt ist.

6. Gehäuse (24) einer rotatorischen dynamoelektrischen Maschine (1) nach einem der vorhergehenden Ansprüche, **dadurch gekennzeichnet , dass** innerhalb der axialen Reihung von Anbauelementen Luftschottelemente (22) vorgesehen sind, das jeweils insbesondere axial zwischen dem Aufnahmeelemente (8) des magnetisch leitfähigen Körpers des Stators (9) und dem Aufnahmeelement eines Lagerschildes (17) angeordnet ist.

7. Gehäuse (24) einer rotatorischen dynamoelektrischen Maschine (1) nach einem der vorhergehenden Ansprüche, **dadurch gekennzeichnet, dass** die Längsstreben (3) der Rahmenstruktur (2) Vollmaterial, Hohlmaterial, Halbprofile oder Mischungen aufweisen.

8. Gehäuse (24) einer rotatorischen dynamoelektrischen Maschine (1) nach einem der vorhergehenden Ansprüche, **dadurch gekennzeichnet, dass** die Rahmenstruktur (2) asymmetrisch ausgeführt ist, indem die Längsstreben (3) um die Achse (15) asymmetrisch angeordnet sind und/oder unterschiedliche Querschnittsformen aufweisen.

9. Gehäuse (24) einer rotatorischen dynamoelektrischen Maschine (1) nach einem der vorhergehenden Ansprüche, **dadurch gekennzeichnet , dass** insbesondere an den Längsseiten der Rahmenstruktur (2) die Wandungen als Schalldämmplatten (16) ausgeführt sind.

10. Dynamoelektrische Maschine (1), insbesondere Windkraftgenerator mit einem Gehäuse (24) nach einem der vorhergehenden Ansprüche.

11. Dynamoelektrische Maschine (1) mit einem Gehäuse (24) nach einem der vorhergehenden Ansprüche 1 bis 9, **dadurch gekennzeichnet, dass** ein Aufsatzkühler (26), insbesondere an einer oberen Anbaustruktur vorgesehen ist.

12. Dynamoelektrische Maschine (1) nach Anspruch 11, **dadurch gekennzeichnet , dass** der Aufsatzkühler (26) als Luft-Luft oder Luft-Wasser Kühler ausgeführt ist.

13. Dynamoelektrische Maschine (1) nach Anspruch 12, **dadurch gekennzeichnet , dass** eine ein- oder beidseitige innere Belüftung der rotatorischen dynamoelektrischen Maschine (1) vorliegt.

14. Windkraftanlage mit einer dynamoelektrischen Maschine (1) nach einem der Ansprüche 10 bis 13.
